(19) Europäisches Patentamt
European Patent Office
Office européen des brevets

(11) Veröffentlichungsnummer : **0 281 873 B1**

(12) **EUROPÄISCHE PATENTSCHRIFT**

(45) Veröffentlichungstag der Patentschrift :
**09.11.94 Patentblatt 94/45**

(51) Int. Cl.$^5$ : **G11B 5/702**

(21) Anmeldenummer : **88102907.8**

(22) Anmeldetag : **26.02.88**

(54) **Magnetische Aufzeichnungsträger.**

(30) Priorität : **07.03.87 DE 3707440**

(43) Veröffentlichungstag der Anmeldung :
**14.09.88 Patentblatt 88/37**

(45) Bekanntmachung des Hinweises auf die Patenterteilung :
**09.11.94 Patentblatt 94/45**

(84) Benannte Vertragsstaaten :
**DE FR GB NL**

(56) Entgegenhaltungen :
**EP-A- 0 099 533**
**EP-A- 0 100 017**
**EP-A- 0 150 005**

(73) Patentinhaber : **BASF Aktiengesellschaft**
**Carl-Bosch-Strasse 38**
**D-67063 Ludwigshafen (DE)**

(72) Erfinder : **Lehner, August**
**Wachenheimer Strasse 4**
**D-6701 Roedersheim-Gronau (DE)**
Erfinder : **Kohl, Albert**
**Schloss-Strasse 26**
**D-6711 Laumersheim (DE)**
Erfinder : **Bobrich, Michael, Dr.**
**In den Muehlgaerten 3**
**D-6737 Boehl-Iggelheim (DE)**
Erfinder : **Roller, Hermann**
**Schwedlerstrasse 118**
**D-6700 Ludwigshafen (DE)**
Erfinder : **Richter, Peter, Dr.**
**Bensheimer Ring 24**
**D-6710 Frankenthal (DE)**
Erfinder : **Lenz, Werner, Dr.**
**Heinrich-Baermann-Strasse 14**
**D-6702 Bad Duerkheim (DE)**
Erfinder : **Kreitner, Ludwig, Dr.**
**Liebigstrasse 10**
**D-6148 Heppenheim (DE)**
Erfinder : **Rudolf, Peter, Dr.**
**Nibelungenweg 14**
**D-6701 Maxdorf (DE)**

**EP 0 281 873 B1**

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft magnetische Aufzeichnungsträger bestehend aus einem nichtmagnetischen Trägermaterial und mindestens einer haftfest darauf aufgebrachten Magnetschicht auf der Basis eines in organischen Bindemitteln feinverteilten magnetischen Materials, wobei das Bindemittel zu mindestens 50 Gew.% aus einem hochmolekularen verzweigten Polyurethanelastomeren mit OH-gruppenhaltigen Harnstoffgruppen an den Kettenenden besteht.

An Magnetschichten, die in modernen Audio- und Videoaufzeichnungs- und Wiedergabegeräten verwendet werden, werden Anforderungen in vielfacher Hinsicht gestellt. Neben den hohen Anforderungen an die Aufzeichnungs-und Wiedergabeeigenschaften bei Audiobändern, Videobändern und flexiblen Datenträgern, die stetig verbessert werden, wird vor allem (um die vorgenannten Verbesserungen zum Tragen zu bringen) bezüglich der mechanischen Eigenschaften der Aufzeichnungsträger eine ständige Anpassung und Verbesserung gefordert. Die Magnetschichten müssen sehr flexibel sein, eine hohe Elastizität aufweisen und eine hohe Reißfestigkeit besitzen. Daneben wird, zur Vermeidung von Pegeleinbrüchen, zunehmend eine Verringerung der Reibungswerte, eine Erhöhung der Abrieb- und Verschleißfestigkeit, gefordert.

Die Verbesserungen dieser verschiedenen Eigenschaften beeinflussen sich jedoch zum Teil sogar gegenläufig. So ist u.a. anzustreben, daß das magnetische Material in der Magnetschicht einen möglichst hohen Volumenanteil einnimmt, also möglichst dicht gepackt ist. Obwohl es bekannt ist, Magnetschichten nahezu völlig aus magnetischem Material, z.B. durch Plattieren oder Aufdampfen magnetisierbarer Metalle, herzustellen, so weisen derartige Speicherschichten noch eine Reihe schwerwiegender vorwiegend mechanischer Probleme auf. Es wird deshalb weiter versucht, eine erhöhte Packungsdichte des magnetischen Materials in der Schicht durch eine Verringerung des Bindemittelanteils und ebenso ein verbessertes Signal-Rausch-Verhältnis durch die Verwendung immer feinteiligerer magnetischer Materialien mit ausgeprägter Nadelform zu erzielen. Durch beide Maßnahmen wird jedoch die mechanische Stabilität der Magnetschicht sowie auch die Haftung der Schicht auf dem Trägermaterial insbesondere bei hoher Temperatur und hoher Luftfeuchte nachteilig beeinflußt.

Als Trägermaterialien für magnetische Aufzeichnungsträger werden vorwiegend Polyethylenterephthalatfolien eingesetzt. Bei der Herstellung werden diese Folie gestreckt und kristallisiert, so daß sie ausgezeichnete Eigenschaften, insbesondere hinsichtlich der mechanischen Festigkeit aufweisen aber auch gegenüber organischen Lösungsmitteln weitgehend beständig sind. Die gute Lösungsmittelbeständigkeit führt aber zu einer schlechten Haftfestigkeit der Magnetschicht.

Eine Magnetschicht, welche durch Dispergierung magnetischer Teilchen in einem Bindemittel zur Herstellung der Überzugsmasse und durch Auftragen derselben auf einen Träger erhalten wurde, besitzt nur bei genügender Haftung gute mechanische Festigkeit. Deshalb kann eine Magnetschicht, welche keine ausreichende Haftung auf einem Träger aufweist, schon bei Anwendung einer geringen Kraft zerstört oder von der Trägerfolie gelöst werden. Es ist äußerst schwierig, eine Magnetschicht zu erhalten, welche selbst bei hoher Luftfeuchtigkeit und Temperatur gut auf einem Träger haftet. Eine brauchbare aber aufwendige Lösung besteht häufig darin, vor dem Auftragen der Magnetschicht eine Haftschicht auf den Träger aufzubringen. Die Zusammensetzungen solcher Haftvermittlerschichten sind vielfach beschrieben, sie stellen jedoch einen zusätzlichen Aufwand hinsichtlich Material, Maschinen und Arbeit dar. Ein weiterer Nachteil ergibt sich daraus, daß sowohl durch den besonderen Arbeitsschritt als auch durch die Zwischenschicht selbst Fehlerquellen sich ergeben und damit gegebenenfalls die bei hochwertigen Aufzeichnungsträgern kritische Fehlerzahl ansteigt. Deshalb werden wirtschaftlich einfache Verfahren angestrebt mit denen sich fehlerfreie Magnetschichten ohne Haftvermittler und mit hervorragenden mechanischen Eigenschaften herstellen lassen, welche insbesondere unter schwierigen klimatischen Bedingungen noch gut haften.

Die für den Einsatz notwendigen Eigenschaften können nur durch Verwendung von Bindemittel-Kombinationen mit ausgezeichnetem mechanischem Verhalten erreicht werden. Wesentlich ist, daß die Bindemittel auch bei hohen Pigmentierungen noch starke Haftkräfte auf die Pigmentoberfläche und auf die Trägerfolie ausüben. Es ist bekannt, daß Magnetschichten, die starken mechanischen Beanspruchungen unterworfen wrden, als Bindemittel vorteilhafterweise Polyurethanelastomere enthalten. Besonders bewährt haben sich Polyesterurethane, wie sie in der DE-B 1 106 959, DE-B 2 753 694, EP-A 0 069 955 oder in der US-A 2 899 411 beschrieben sind. Jedoch weisen diese Polyurethane als alleinige Bindemittel oft Nachteile auf. In vielen Fällen wird die Pigmentbenetzung und -dispergierung ungünstig beeinflußt, so daß eventuelle Versinterungen beim Mahlprozeß nur ungenügend zerteilt werden oder eine Agglomeration der Pigmentteilchen nicht ausreichend verhindert wird, was zu schlechter Ausrichtbarkeit und damit zu verringerten Packungsdichten führt. Ein weiterer Nachteil der genannten Polyurethane ist, daß die erforderliche Elastizität häufig mit einer zu geringen Härte und einer Tendenz zur Oberflächenklebrigkeit einhergeht. Es ist daher Stand der Technik, entsprechende Polyurethane mit anderen Bindemitteln zu kombinieren. Beispielsweise wird in der DE-B 1 269

661 eine Abmischung von Polyurethanen mit Polyestern beschrieben. In der Praxis werden die genannten Nachteile jedoch nicht ausreichend vermieden. Andere vorgeschlagene Bindemittel-Kombinationen sind z.B. Mischungen aus Polyurethanen mit Phenoxyharzen gemäß DE-B 1 295 011, mit Vinylidenchlorid-Acrylnitril-Copolymerisaten entsprechend DE-B 2 037 605 oder mit Polycarbonaten nach DE-A 2 114 611, Kombinationen von Polyurethanharzen mit Vinylchlorid Vinylacetat-Copolymerisaten entsprechend DE-B 1 282 700 oder Kombination von Polyurethanelastomeren mit Copolymerisaten aus Vinylchlorid und Acrylsäureestern, wie z.B. in der DE-A 2 255 802 oder DE-A 2 234 822 beschrieben, weisen gute Pigmentdispergierfähigkeit auf und ergeben Schichten mit guter Packungsdichte.

Es hat sich nun gezeigt, daß die beschriebenen und zum Teil auch bewährten, hochmolekularen Polyurethanelastomere als Bindemittel oder in Bindemittelkombination die steigenden Qualitätsanforderungen bezüglich der Schichthaftung nicht mehr erfüllen, wenn sowohl Temperatur wie auch Luftfeuchtigkeit erhöht werden, z.B. auf 30 bis 60°C bei 80 bis 100 % rel. Luftfeuchtigkeit (Tropenklima). Es bestand daher die Aufgabe durch einfache Maßnahmen hochmolekulare Polyurethanelastomere bereitzustellen, welche die notwendigen mechanischen Eigenschaften, wie hohe Abriebfestigkeit, Dehnung und Reißkraft besitzen und bei deren Verwendung die Haftung unter Tropenbedingungen verbessert wird.

Es wurde nun gefunden, daß magnetische Aufzeichnungsträger, bestehend aus einem nichtmagnetischen Trägermaterial und mindestens einer haftfest darauf aufgebrachten Magnetschicht auf der Basis eines in einem mindestens zu 50 Gew.% aus einem thermoplastischen Polyurethan bestehenden Bindemittel feinverteilten magnetischen Materials, die aufgabengemäß geforderten Eigenschaften haben, wenn als thermoplastisches Polyurethan ein in Tetrahydrofuran lösliches, isocyanatgruppenfreies, verzweigtes Polyurethan mit OH-gruppenhaltigen Harnstoffgruppen an den Kettenenden und einem Molekulargewicht zwischen 50 000 und 150 000 eingesetzt wird, welches aus

A. 1 Mol eines Polydiols mit einem Molekulargewicht zwischen 400 und 4000,
B. 0,3 bis 10 Mol eines geradkettigen aliphatischen Diols mit 2 bis 10 Kohlenstoffatomen,
C. 0,05 bis 0,5 Mol eines Tri- oder Polyols mit 3 bis 10 Kohlenstoffatomen,
D. 1,3 bis 13 Mol eines Diisocyanats mit 6 bis 30 Kohlenstoffatomen und
E. 0,09 bis 2 Mol eines Aminoalkohols mit 2 bis 16 Kohlenstoffatomen

hergestellt wird, mit der Maßgabe, daß sich das Verhältnis der OH-Gruppen der Komponenten A bis C zu den NCO-Gruppen der Komponente D zu den Amingruppen der Komponente E wie 1 zu 1,03 bis 1,3 zu 0,03 bis 0,3 verhält.

Das in den erfindungsgemäßen Aufzeichnungsträgern eingesetzte verzweigte Polyurethan weist demnach zwischen 6 und 24 und bevorzugt zwischen 8 und 24 OH-Gruppen pro Molekül auf, die über Harnstoffgruppen mit den Kettenenden verknüpft sind. Dabei ist zur Erzielung der erforderlichen mechanischen Eigenschaften mindestens ein Molekulargewicht (Gewichtsmittel) von 50 000 bis 150 000 und insbesondere ein Molekulargewicht von 60 000 bis 110 000. Eine OH-Zahl von größer 30 ist bei hohen Molekulargewichten jedoch von Nachteil, da bei zu hohen OH-Zahlen die Moleküle zu stark verzweigt sind, wodurch die Herstellung und Verwendung erschwert wird, denn eine zu hohe Verzweigung führt zu Molekülknäueln und zu anvernetzten Polymeren. 1 bis 15, insbesondere 2 bis 10, Verzweigungen mit einer rechnerisch mittleren Kettenlänge von über 10 000 führen zu den angestrebten Polyurethanelastomeren.

Die derart aufgebauten Polyurethane haben im allgemeinen im unvernetzten Zustand eine Härte nach DIN 53 157 von 18 bis 45 s. Sie haben ferner einen E-Modul (Elastizitätsmodul gemäß DIN 53 457) im Bereich von 30 bis 100 $N/mm^2$, eine Reißdehnung zwischen 300 und 1000 % (DIN 53 455) und eine Reißfestigkeit zwischen liegt zwischen 80 und 180°C. Besonders günstig ist die Pendelhärte 55 bis 90 $N/mm^2$ (DIN 53 455) mit einem Erweichungspunkt von 100 bis 160°C.

Eine weitere Verbesserung der erfindungsgemäßen Aufzeichnungsträger kann darüber hinaus noch erreicht werden, wenn der Dispersion im wesentlichen bestehend aus dem magnetischen Material und dem speziellen Polyurethan noch vor dem Auftragen auf das Trägermaterial ein Polyisocyanat zugesetzt wird. Für die Vernetzung kann eine Vielzahl organischer Di-, Tri- oder Polyisocyanate oder Isocyanatprepolymerer bis zu einem Molgewicht von 10 000, vorzugsweise zwischen 500 und 3000, verwendet werden. Bevorzugt sind Polyisocyanate bzw. Isocyanatprepolymere, die mehr als 2 NCO-Gruppen pro Molekül tragen. Als besonders geeignet haben sich Polyisocyanate auf Basis von Toluylendiisocyanat, Hexamethylendiisocyanat oder Isophorondiisocyanat, die durch Polyaddition an Di- und Triole oder durch Biuret- und Isocyanuratbildung entstehen, erwiesen. Besonders günstig ist ein Additionsprodukt von Toluylendiisocyanat an Trimethylolpropan und Diethylenglykol.

Durch das Zumischen der vorgenannten Isocyanate bevorzugt zur fertigen Magnetdispersion vor dem Auftragen auf den Träger, wird die Haftfestigkeit nach Klimalagerung nochmals sehr wesentlich verbessert, außerdem können daneben die mechanischen Eigenschaften der erfindungsgemäßen Aufzeichnungsträger bei Verringerung der Thermoplastizität der Magnetschicht in ihrer Abriebfestigkeit nochmals sehr wesentlich verbessert werden. Die Menge der dafür zugesetzten Polyisocyanate beträgt im allgemeinen etwa 1 bis 20 Gew.%, bevorzugt 4 bis 15 %, bezogen auf die Gesamtmenge des Bindemittels.

Als Komponente A (Polydiol) wird ein Polyesterol, Polyetherol oder Polycarbonat mit einem Molekulargewicht von 400 bis 4000, bevorzugt von 700 bis 2 500, eingesetzt. Die Polydiole sind zweckmäßigerweise überwiegend lineare Polymere mit zwei endständigen OH-Gruppen. Die Säurezahl der Polydiole ist kleiner als 10 und vorzugsweise kleiner als 3. Die Polyesterole lassen sich in einfacher Weise durch Veresterung von aliphatischen oder aromatischen Dicarbonsäuren mit 4 bis 15 C-Atomen, vorzugsweise 4 bis 8 C-Atomen, mit aliphatischen oder cycloaliphatischen Glykolen, bevorzugt mit 2 bis 20 C-Atomen oder durch Polymerisation von Lactonen mit 3 bis 10 C-Atomen herstellen. Als Dicarbonsäuren lassen sich beispielsweise Glutarsäure, Pimelinsäure, Korksäure, Sebacinsäure, Dodecansäure, Terephthalsäure, Isophthalsäure und vorzugsweise Adipinsäure, Bernsteinsäure und Terephthalsäure einsetzen. Die Dicarbonsäuren können einzeln oder als Gemische verwendet werden. Zur Herstellung der Polyesterole kann es gegebenenfalls vorteilhaft sein, anstelle der Dicarbonsäuren die entsprechenden Säurederivate, wie Carbonsäureanhydride oder Carbonsäurechloride zu verwenden. Beispiele für geeignete Glykole sind Diethylenglykol, Pentandiol, Decandiol-1,10 und 2,2,4-Trimethylpentandiol-1,5. Vorzugsweise verwendet werden Ethandiol-1,2, Butandiol-1,4, Hexandiol-1,6 und 2,2-Dimethylpropandiol-1,3, 1,4-Dimethylolcyclohexan, 1,4-Diethanolcyclohexan, 1,4-Diethanolpropan. Je nach den gewünschten Eigenschaften der Polyurethane können die Polyole allein oder als Mischung in verschiedenen Mengenverhältnissen verwendet werden. Als Lactone für die Herstellung der Polyesterole eignen sich z.B. $\alpha,\alpha$-Dimethyl-$\beta$-propiolacton, Butyrolacton und vorzugsweise Caprolacton. Polyetherole sind beispielsweise Polytetrahydrofuran oder Polypropylenoxiddiol, die Polycarbonate sind im allgemeinen auf Hexandiol-1,6-Basis aufgebaut.

Als Komponente B werden geradkettige aliphatische Diole mit 2 bis 10 C-Atome, vorzugsweise 2 bis 10 C-Atome, eingesetzt, so z.B. Ethandiol-1,2, Propandiol-1,3, Butandiol-1,4, Hexandiol-1,6, Pentandiol-1,5, Decandiol-1,10, 2-Methyl-1,3-propandiol, 2-Methyl-2-butyl-1,3-propandiol, 2,2-Dimethyl-1,4-butandiol, 2-Methyl-2-butyl-1,3-propandiol, Hydroxypicalinsäureneopentylglykolester, Diethylenglykol, Triethylenglykol und Methyldiethanolamin, 1,4-Dimethylolcyclohexan, 1,4-Diethanolcyclohexan. Die Diole können einzeln oder als Gemische verwendet werden.

Als Triole (Komponente C) werden Verbindungen mit 3 bis 10, vorzugsweise 3 bis 6 C-Atomen, angewandt. Beispiele für entsprechende Triole sind Glycerin oder Trimethylolpropan. Geeignet sind auch niedermolekulare Umsetzungsprodukte von z.B. Trimethylolpropan mit Ethylenoxid und/oder Propylenoxid. Das Vorhandensein von Triolen bei der Polyaddition führt zu einer Verzweigung des Endprodukts, was sich, sofern keine örtliche Vernetzung auftritt, positiv auf die mechanischen Eigenschaften des Polyurethans auswirkt.

Als Polyole (Komponente C) lassen sich beispielsweise Erythrit, Pentaerythrit und Sorbit einsetzen.

Zur Bildung der NCO-gruppenhaltigen Zwischenprodukte werden die unter A, B und C genannten Komponenten mit aliphatischen, cycloaliphatischen oder aromatischen Diisocyanten mit 6 bis 30 C-Atomen (Komponente D) umgesetzt. Zu diesem Zweck eignen sich z.B. Verbindungen wie Toluylen-2,4-diisocyanat, Toluylen-2,6-diisocyanat, m-Phenylendiisocyanat, 4-Chlor-1,3-phenylendiisocyanat, 1,5-Naphthylendiisocyanat, 1,6-Hexamethylendiisocyanat, 1,4-Cyclohexylendiisocyanat und 1,5-Tetrahydronaphthyleniisocyanat, Diphenylmethandiisocyanat, Dicyclohexylmethandiisocyanat oder Isophorondiisocyanat.

Zur Bildung der OH-gruppenhaltigen Polyurethanharnstoffelastomeren wird das NCO-gruppenhaltige Zwischenprodukte aus A bis D mit Aminoalkoholen (Komponenten E) umgesetzt. Diese Aminoalkohole mit 2 bis 16, vorzugsweise 3 bis 6 C-Atomen sind u.a. Monoethanolamin, Methylisopropanolamin, Ethylisopropanolamin, Methylethanolamin, 3-Aminopropanol, 1-Ethylaminobutanol-2, 4-Methyl-4-aminopentanol-2, N-(2-Hydroxyethyl)anilin. Diolamine sind besonders geeignet, da durch ihre Anlagerung am Kettenende die OH-Zahl der Polymeren verdoppelt wird. Als besonders günstig haben sich Diethanolamin und Diisopropanoldiamin erwiesen.

Das Verhältnis der Komponenten A bis D kann von 1,35 bis 13 Mol Diisocyanat je Mol Polydiol bei Verwendung von 0,3 bis 10 Mol des Diols mit 2 bis 20 C-Atomen und 0,05 bis 0,5 Mol Triol variiert werden, wobei die Menge des verwendeten Diols teilweise von dem Molekulargewicht des verwendeten Polydiols abhängt. Aus praktischen Gründen ist es jedoch zweckmäßig, einen Diisocyanatüberschuß von 3 % über der zur vollständigen Umsetzung der Reaktionsteilnehmer erforderlichen Menge zu verwenden, so daß das Verhältnis der Zahl der eingesetzten Hydroxylgruppen zur Zahl der Isocyanatgruppen in der Reaktionsmischung 1,03 bis 1,3, vorzugsweise 1,05 bis 1,15 beträgt. Der NCO-Überschuß wird dann stöchiometrisch mit den NH-Gruppen des Aminoalkohols umgesetzt, so daß das Verhältnis der Komponenten (A bis C):D:E 1:1,03 bis 1,3:0,03 bis 0,3, bevorzugt 1:1,05 bis 1,15:0,05 bis 0,15 beträgt.

Die so aufgebauten thermoplastischen, elastischen OH-gruppenhaltigen Polyurethane werden in Lösung nach dem 2-Stufenverfahren, gegebenenfalls in Gegenwart der Katalysatoren und anderen Hilfsmitteln und-/oder Zusatzstoffen hergestellt. Diese Produkte nach dem lösungsmittelfreien Batch-Verfahren herzustellen,

ist nicht möglich. Da sich aufgrund der Anwesenheit des Triols und der Reaktion von Amin mit NCO-Gruppen bei der Substanzpolyaddition zumindest teilweise Gel-Teilchen bilden, wird in Lösung gearbeitet. Allgemein wird bei der Lösungspolyaddition die Gefahr einer örtlichen Übervernetzung, wie sie bei der Substanzpolyaddition auftritt, vermieden.

Beim 2-Stufenverfahren sind je nach Reaktionsbedingungen (Lösungsmittelmenge, Reaktionswärme) zwei unterschiedliche Fahrweisen möglich.

Fahrweise 1: Das Diisocyanat wird mit etwas Lösungsmittel vorgelegt, dann werden die Bausteine A, B, C und gegebenenfalls der Katalysator und die Hilfs- und Zusatzstoffe in Lösungsmittel bei Temperaturen von 20 bis 90°C, vorzugsweise 30 bis 70°C, in 0,2 bis 5 Stunden zugegeben. Die Komponenten werden bis zum gewünschten NCO-Gehalt umgesetzt, dann wird in der 2. Stufe der Baustein E zugesetzt.

Fahrweise 2: Bei diesem Verfahren werden alle Ausgangskomponenten A bis D in einem Teil des Lösungsmittels gelöst, so daß die Lösungen mit einem Feststoffgehalt von 15 bis 50 Gew.% gebildet werden. Anschließend werden die Lösungen unter Rühren auf Temperaturen von 20 bis 90°C, vorzugsweise von 30 bis 70°C, gegebenenfalls nach der Katalysatorzugabe, erwärmt. Dann werden die Komponenten bis zum gewünschten NCO-Gehalt umgesetzt, danach wird in der 2. Stufe der Baustein E zugegeben.

Beim 2-Stufenverfahren wird in der ersten Stufe mit einem NCO-Überschuß, gegenüber den Bausteinen A bis C gearbeitet. Bei beiden Fahrweisen ist es möglich, in einem Teil des Lösungsmittels die Reaktion zu beginnen und das restliche Lösungsmittel während oder nach der Reaktion zuzugeben.

Als Lösungsmittel für die Herstellung der Polyurethane werden vorzugsweise cyclische Ether, wie Tetrahydrofuran und Dioxan, und cyclische Ketone, wie Cyclohexanon, verwendet. Selbstverständlich können je nach Anwendungsgebiet die Polyurethane auch in anderen stark polaren Lösungsmitteln, wie Dimethylformamid, N-Methylpyrrolidon, Dimethylsulfoxid oder Ethylglykolacetat gelöst werden. Ebenso ist es möglich, die genannten Lösungsmittel mit Aromaten, wie Toluol oder Xylol und Estern, wie Ethyl- oder Butylacetat, zu mischen.

Als geeignete Katalysatoren zur Herstellung der Polyurethane und für die Vernetzungsreaktion seien beispielhaft genannt: tert. Amine, wie Triethylamin, Triethylendiamin, N-Methyl-pyridin und N-Methyl-morpholin, Metallsalze, wie Zinnoctoat, Bleioctoat und Zinkstearat und organische Metallverbindungen, wie Dibutylzinnlaurat. Die geeignete Katalysatormenge ist abhängig von der Wirksamkeit des in Frage kommenden Katalysators. Im allgemeinen hat es sich als zweckmäßig erwiesen, 0,005 bis 0,3 Gewichtsteile für jeweils 100 Gewichtsteile, vorzugsweise 0,01 bis 0,1 Gewichtsteile für jeweils 100 Gewichtsteile Polyurethan zu verwenden.

Die erfindungsgemäß verwendeten Polyurethane lassen sich als alleinige Bindemittel für die Herstellung von Magnetschichten verwenden, es kann jedoch für spezielle Anwendungszwecke bei magnetischen Aufzeichnungsträgern zweckmäßig sein, eine zweite Bindemittelkomponente in Mengen von 5 und bis zu 50 Gewichtsteilen, vorzugsweise von 10 bis 40 Gewichtsteilen, bezogen auf die resultierende Gesamtbindemittelmenge zuzusetzen. Die im Bindemittelgemisch mit den angegebenen speziellen Polyurethanen enthaltenen physikalisch trocknenden Bindemitteln sind bekannt. Es handelt sich hierbei um ein Polyvinylformal-Bindemittel, welches durch Hydrolyse eines Polymerisats eines Vinylesters und anschließende Umsetzung des Vinylalkohol-Polymeren mit Formaldehyd hergestellt wurde. Die Polyvinylformale haben zweckmäßigerweise einen Vinylformalgruppengehalt von mindestens 65 Gew.% und insbesondere mindestens 80 Gew.%. Geeignete Polyvinylformale haben einen Gehalt an Vinylalkohol-Gruppen von 5 bis 13 Gew.%, einen Gehalt an Vinylformal-Gruppen von 80 bis 88 Gew.%, ein spezifisches Gewicht von ca. 1,2 und eine Viskosität von 50 bis 120 cP gemessen bei 20°C mit einer Lösung von 5 g Polyvinylformal in 100 ml Phenol-Toluol (1:1) mit einem K-Wert nach Fikentscher von 40 bis 70 (1 %ig in DMF). In gleicher Weise geeignet sind neben dem Polyvinylformal Vinylchlorid-diol-mono- oder -di(meth)acrylat-Copolymerisate, die sich z.B. in an sich bekannter durch Lösungscopolymerisation oder Suspensionscopolymerisation von Vinylchlorid und dem Diol-monomethacrylat oder -monoacrylat herstellen lassen. Das hierfür zum Einsatz gelangende Diolmono- oder -di-acrylat oder -methacrylat ist ein Veresterungsprodukt von Acrylsäure oder Methacrylsäure mit der entsprechenden molaren Menge an aliphatischem Diol mit 2 bis 4 C-Atomen, wie Ethylenglykol, 1,4-Butandiol und bevorzugt Propandiol, wobei das Propandiol vorzugsweise aus 1,3-Propandiol und 0 bis 50 Gew.% 1,2-Propandiol besteht. Die Copolymerisate haben zweckmäßigerweise einen Vinylchloridgehalt von 50 bis 95 Gew.% und einen Diolacrylat- oder -methacrylat-Gehalt von 5 bis 50 Gew.%. Besonders geeignete Copolymerisate besitzen vorzugsweise einen Gehalt von 70 bis 90 Gew.%. Vinylchlorid und 10 bis 30 Gew.% Diolmonoacrylat bzw. Diolmonomethacrylat. Eine 15 %ige Lösung besonders geeigneter Copolymerisate wie der Vinylchlorid-Propandiolmonoacrylat-Copolymerisate in einem Gemisch aus gleichen Volumenteilen von Tetrahydrofuran und Dioxan weist bei 25°C eine Viskosität von etwa 30 cP (mPa.s) auf. Der K-Wert nach H. Fikentscher (Cellulosechemie 3 (1931), S. 58 ff.) der besonders geeigneten Produkte liegt zwischen 30 und 50, vorzugsweise bei etwa 40 (1 % in DMF). Außerdem lassen sich auch Phenoxyharze einsetzen, deren Konstitution der Formel

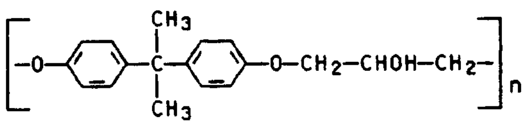

mit n annähernd gleich 100 entspricht. Es handelt sich hierbei um Polymere wie sie z.B. in der DE-B 12 95 011 beschrieben sind. In gleicher Weise eignen sich Celluloseester-Bindemittel in dem bezeichneten Bindemittelgemisch. Dies sind Veresterungsprodukte der Cellulose mit Carbonsäuren mit 1 bis 4 Kohlenstoffatomen, wie z.B. Celluloseacetat, Cellulosetriacetat, Celluloseacetopropionat, Celluloseacetobutyrat.

Die Verarbeitung der speziellen verzweigten Polyurethane mit den OH-gruppenhaltigen Harnstoffgruppen an den Kettenenden ggf. in Abmischung mit anderen Bindemitteln zusammen mit dem magnetischen Material und den üblichen Hilfsstoffen zu den erfindungsgemäßen Aufzeichnungsträgern erfolgt in der an sich bekannten Weise.

Als anisotrope magnetische Materialien können die an sich bekannten Pigmente verwendet werden, die die Eigenschaften der resultierenden Magnetschichten wesentlich beeinflussen, wie z.B. Gamma-Eisen(III)-oxid, feinteiliger Magnetit, ferromagnetisches undotiertes oder dotiertes Chromdioxid oder kobaltmodifiziertes Gamma-Eisen(III)-oxid. Bevorzugt sind nadelförmiges Gamma-Eisen(III)-oxid sowie ferromagnetisches Chromdioxid. Die Teilchengröße beträgt im allgemeinen 0,2 bis 2 µm, bevorzugt ist der Bereich von 0,3 bis 0,8 µm.

Ferner enthalten die Magnetschichten in kleinen Mengen Zusätze wie Dispergiermittel und/oder Gleitmittel, aber auch Füllstoffe, die bei der Dispergierung der magnetischen Materialien oder bei der Herstellung der Magnetschicht zugemischt werden. Beispiele solcher Zusätze sind Fettsäuren oder isomerisierte Fettsäuren, wie Stearinsäure oder deren Salze mit Metallen der ersten bis vierten Hauptgruppe des Periodensystems der Elemente, amphotere Elektrolyte, wie Lecithin sowie Fettsäureester oder Wachse, Siliconöle, Ruß usw. Die Menge der Zusätze ist die an sich übliche, sie liegt im allgemeinen unter 10 Gew.%, bezogen auf die Magnetschicht.

Das Mengenverhältnis von magnetischem Material zu Bindemittel in den erfindungsgemäßen Aufzeichnungsmaterialien liegt zwischen 1 bis 10 und ist insbesondere 3 bis 6 Gewichtsteilen magnetisches Material auf ein Gewichtsteil des Bindemittelgemisches. Es ist ein besonderer Vorteil, daß aufgrund des vorzüglichen Pigmentbindevermögens der speziellen Polyurethane hohe Magnetmaterialkonzentrationen in den Magnetschichten möglich sind, ohne daß die mechanisch-elastischen Eigenschaften verschlechtert oder die Anwendungseigenschaften merklich in Mitleidenschaft gezogen werden.

Als nichtmagnetische und nichtmagnetisierbare Träger lassen sich die üblichen starren oder flexiblen Trägermaterialien verwenden, insbesondere Folien aus linearen Polyestern, wie Polyethylenterephthalat, im allgemeinen in Stärken von 4 bis 200 µm und insbesondere von 6 bis 36 µm. In neuerer Zeit ist auch die Anwendung der Magnetschichten auf Papierträgern für Zwecke der mittleren Datentechnik bedeutend geworden; auch hierfür lassen sich die erfindungsgemäße Beschichtungsmassen vorteilhaft verwenden.

Die Herstellung der erfindungsgemäßen magnetischen Aufzeichnungsträger kann in bekannter Weise erfolgen. Zweckmäßig wird die in einer Dispergiermaschine, z.B. einer Topfkugelmühle oder einer Rührwerksmühle, aus dem magnetischen Material und einer Lösung der Bindemittel unter Zusatz von Dispergiermitteln und anderen Zusätzen hergestellte Magnetpigmentdispersion gegebenenfalls nach dem Zumischen des Polyisocyanatvernetzers filtriert und mit der üblichen Beschichtungsmaschine, z.B. mittels eines Linealgießers, auf den nichtmagnetischen Träger aufgetragen. In der Regel erfolgt eine magnetische Ausrichtung, bevor die flüssige Beschichtungsmischung auf dem Träger getrocknet wird; letzteres geschieht zweckmäßigerweise in 2 bis 5 min bei Temperaturen von 50 bis 90°C. Die Magnetschichten können auf üblichen Maschinen mittels Hindurchführen zwischen geheizten und polierten Walzen, gegebenenfalls bei Anwendung von Druck und Temperaturen von 25 bis 100°C, vorzugsweise 60 bis 80°C, geglättet und verdichtet werden.

Dabei hat es sich bei der ggf. zusätzlich durchgeführten Vernetzung der Bindemitteln sehr vorteilhaft erwiesen, die Kalandrierung vorzunehmen bevor die Vernetzung abgeschlossen ist, da die OH-haltigen Polymeren in unvernetzten Zustand sehr thermoplastisch sind, ohne hierbei zu verkleben. Die Dicke der Magnetschicht beträgt im allgemeinen 0,5 bis 20 µm, vorzugsweise 1 bis 10 µm. Im Falle der Herstellung von Magnetbändern werden die beschichteten Folien in der Längsrichtung in den üblichen, meist nach Zoll festgelegten Breiten geschnitten.

Die erfindungsgemäßen magnetischen Aufzeichnungsträger weisen gegenüber solchen, welche mit den dem Stand der Technik entsprechenden Polyurethanen bzw. Polyurethanmischungen mit geeigneten härteren Lackharzkomponenten als Bindemittel hergestellt sind, verbesserte Haft-bzw. Schälfestigkeit auf. Außerdem ist wesentlich, daß sich mit dem OH-gruppenhaltigen Polyurethan die bekannten magnetischen Materialien in

üblichen Dispergiereinrichtungen leicht und vor allem mit sehr geringem Zeit- und Energieaufwand zu homogenen hochpigmentierten Dispersionen verarbeiten lassen. Zusätzlich können mit Hilfe des mit Polyisocyanat vernetzten OH-gruppenhaltigen Polyurethanbindemittels in vereinfachter und verkürzter Arbeitsweise magnetisch und damit elektroakustisch verbesserte magnetische Aufzeichnungsträger erhalten werden. Ein weiterer Vorteil ist dabei, daß die für die erfindungsgemäßen magnetischen Aufzeichnungsträger geeigneten Polymeren durch die Vernetzung Magnetschichten ergeben, welche auch bei erhöhter Temperatur und Luftfeuchtigkeit beständig sind.

Die in den nachstehenden Beispielen und Vergleichsversuchen genannten Teile und Prozente beziehen sich, soweit nicht anders angegeben, auf das Gewicht. Volumenteilen verhalten sich zu Gewichtsteilen wie Liter zu Kilogramm.

Die Haftfestigkeit der Magnetschicht wurde gemäß ECMA-Norm Nr. 120, Punkt 5.11, Seite 6 bestimmt. Beim Messen der Schälfestigkeit wird ein Band folienseitig, unter einem definierten Winkel über eine scharfkantige Klinge gezogen. Hierbei wird der Bandzug, welcher ständig gemessen wird bis zum Moment des Abschälens der Schicht (über der Klinge), kontinuierlich erhöht. Der Bandzug zum Zeitpunkt der Schichtablösung, ist das Maß für die Schälfestigkeit.

Beispiel 1

a) In einem beheizbaren Reaktionsgefäß von 150 000 Volumenteilen Inhalt, ausgerüstet mit Rührer und Rückflußkühler, werden 6.600 Teile eines Polycarbonats (Molekulargewicht ca. 2.000), 584 Teile 1,6-Hexandiol, 74 Teile Trimethylpropan, 2.607 Teile ethoxyliertes 2,2-Bis(4-hydroxyphenyl)-propan, 3.465 Teile 4,4'-Diphenylmethandiisocyanat, 775 Teile Toluylendiisocyanat in 32.911 Teilen Tetrahydrofuran gelöst und auf ca. 55°C erwärmt. Die Komponenten werden bis zu einer Endviskosität von 20 Pas (bei 60°C) umgesetzt und anschließend mit 23.509 Teilen Tetrahydrofuran auf einen Feststoffgehalt von 20 % verdünnt. Der NCO-Gehalt ist 0,1 %. Gleichzeitig wird die Reaktion durch Zugabe von 238 Teilen Diethanolamin abgestoppt. Der K-Wert des gebildeten Polymeren beträgt 63, gemessen als 1 %ige Lösung in Dimethylformamid. Die OH-Zahl beträgt 12.

b) In einer Stahlkugelmühle mit einem Füllvolumen von 100 000 Volumenteilen, die mit etwa 40 Umdrehungen pro Minute betrieben wird, werden 100 000 Teile Stahlkugeln, 16 000 Teile der unter a) angegebenen der auf 12,5 % verdünnten Lösung des Polyurethanelastomeren, 10 000 Teile einer 10 %igen Lösung eines Polyvinylformals, bestehend aus 82 % Vinylformal-, 12 % Vinylacetat- und 6 % Vinylalkoholeinheiten mit einem K-Wert von 50 (1 %ig in DMF), 67,5 Teile N-Talgfett-1,3-diaminodioleat, 270 Teile Zinkstearat und 13 500 Teile eines ferromagnetischen Chromdioxidpigments mit einer mittleren Teilchengröße von 0,5 μm und einem Verhältnis von Länge zu Dicke von 4:1 bis 9:1 und 4 500 Teile Tetrahydrofuran eingefüllt und 120 Std. dispergiert. Die Magnetdispersion wird sodann unter Druck durch einen Filter von 5 μm Porenweite filtriert. Mit einem Linealgießer wird nach der üblichen Technik eine 20 μm starke Polyethylenterephthalatfolie mit der Magnetdispersion beschichtet und nach Durchlaufen eines Magnetfeldes die Beschichtung bei Temperaturen zwischen 60 und 100°C getrocknet. Durch Hindurchführen zwischen beheizten Walzen (70°C) unter Druck wird die Magnetschicht verdichtet und geglättet. Die resultierende Dicke beträgt 5 μm. Die beschichtete Folie wird anschließend in Bänder von 3,81 mm Breite geschnitten. Die Meßergebnisse sind in Tabelle 1 angegeben.

Vergleichsversuch 1

Die Zusammensetzung und Herstellung erfolgt wie in Beispiel 1 mit der Ausnahme, daß anstelle des Abstoppmittels Diethanolamin die entsprechende molare Menge Dibutylamin eingesetzt wurde. Die Meßergebnisse sind in Tabelle 1 angegeben.

Tabelle 1

| Lagerzeit | Beispiel 1 | | | | Vergleichsversuch 1 | | | |
|---|---|---|---|---|---|---|---|---|
| | Haftfestigkeit | | Schälfestigkeit | | Haftfestigkeit | | Schälfestigkeit | |
| | 23°C/ 50 % rel. F. | 40°C/ 93 % rel. F. | 23°C/ 50 % rel. F. | 40°C/ 93 % rel. F. | 23°C/ 50 % rel. F. | 40°C/ 93 % rel. F. | 23°C/ 50 % rel. F. | 40°C/ 93 % rel. F. |
| 1 Woche | 24 cN | 24 cN | 400 cN | 260 cN | 24 cN | 20 cN | 350 cN | 140 cN |
| 2 Wochen | 24 cN | 23 cN | 400 cN | 230 cN | 23 cN | 16 cN | 280 cN | 100 cN |
| 3 Wochen | 23 cN | 23 cN | 400 cN | 240 cN | 24 cN | 13 cN | 250 cN | 40 cN |
| 4 Wochen | 24 cN | 22 cN | 400 cN | 230 cN | 23 cN | 13 cN | 200 cN | 80 cN |

Beispiel 2

(a) In einem beheizbaren Reaktionsgefäß von 150 000 Volumenteilen Inhalt, ausgerüstet mit Rührer und

Rückflußkühler, werden 6.600 Teile eines Polyesterdiols aus Adipinsäure und 1,4-Butandiol (Molekulargewicht ca. 1000), 778 Teile 1,4-Butandiol, 42 Teile Trimethylolpropan, 4046 Teile 4,4'-Diphenylmethyldiisocyanat, in 460 343 Teilen Tetrahydrofuran gelöst und auf ca. 55°C erwärmt. Die Komponenten werden bis zu einer Endviskosität von 20 Pas (bei 60°C) umgesetzt und anschließend mit 34 571 Teilen Tetrahydrofuran auf einen Feststoffgehalt von 12,5 % verdünnt. Der NCO-Gehalt beträgt 0,06 %. Gleichzeitig wird die Reaktion durch Zugabe von 100 Teilen Diethanolamin abgestoppt. Der K-Wert des gebildeten Polymeren beträgt 63, gemessen als 1 %ige Lösung in Dimethylformamid. Die OH-Zahl beträgt 12.

(b) In eine Stahlkugelmühle von 6 l Rauminhalt, gefüllt mit 8 kg Stahlkugeln eines Durchmessers von 4 bis 6 mm, wurden 900 g eines ferromagnetischen Chromdioxidpigments mit einer mittleren Teilchengröße von 0,5 µm und einem Verhältnis von Länge zu Dicke von 4:1 bis 9:1 und von einer Koerzitivkraft von 40,0 kA/m und spezifischer Oberfläche von 20 $m^2/g$ zusammen mit 30,3 g einer 12,5 %igen Lösung des erfindungsgemäßen Polyurethanelastomeren, 81 g einer 20 %igen Lösung eines Polyvinylformals, bestehend aus 82 % Vinylformal-, 12 % Vinylacetat- und 6 % Vinylalkoholeinheiten, 13,5 g Zinkstearat, 4,5 g Stearylamid, 4,5 g N-Talgfett-1,3-diaminodioleat und 913 g eines Gemisches von gleichen Teilen Tetrahydrofuran und Dioxan, eingefüllt und etwa 72 Std. dispergiert. Dann wurden in der Nachphase weitere 818 g der erfindungsgemäßen Polyurethanelastomerlösung und 219 g der Polyvinylformallösung zugesetzt und weitere 24 Std. dispergiert. Danach wurde die Dispersion aus der Mühle entnommen und unter Druck durch ein Filter von 5 µm Porenweite filtriert. Nach der Filtration wurden unter kräftigem Rühren pro kg Dispersion 17 g einer 50 %igen Lösung eines Triisocyanats aus 3 Mol Tolyilendiisocyanat und 1 Mol Trimethylolpropan zugegeben. Danach wurde die Dispersion auf eine 23 µm dicke Polyethylenterephthalatfolie mittels eines üblichen Linealgießers aufgetragen. Die beschichtete Folie wurde nach Durchlaufen eines Magnetfeldes zu Ausrichten der Magnetteilchen bei Temperaturen zwischen 50 und 90°C getrocknet. Nach der Trocknung wurde die Magnetschicht durch Hindurchziehen zwischen beheizten Walzen verdichtet und geglättet, so daß die Dicke der Magnetschicht 4 µm betrug. Die beschichtete Folie wird in 12,65 mm breite Bänder für die Computeranwendung geschnitten. Die Meßergebnisse für die Haftfestigkeit sind in der Tabelle 2 zusammengestellt.

Vergleichsversuch 2

Es wird wie in Beispiel 2 beschrieben verfahren, nur daß anstelle des mit Diethanolamin abgestoppten Polyurethanelastomeren ein solches gleicher Zusammensetzung verwendet wurde, das mit der entsprechenden Menge Dibutylamin abgestoppt wurde. Die Meßergebnisse sind in Tabelle 2 angegeben.

Tabelle 2

| | Beispiel 2 | | Vergleichsversuch 2 | |
|---|---|---|---|---|
| Lagerzeit | Haftfestigkeit bei | | Haftfestigkeit bei | |
| | 23°C<br>5 % rel. F. | 40°C<br>93 % rel. F. | 23°C<br>50 % rel. F. | 40°C<br>93 % rel. F. |
| 1 Woche | 3,4 N | 3,2 N | 1,5 N | 1,6 N |
| 2 Wochen | 3,1 N | 2,8 N | 1,4 N | 1,2 N |
| 3 Wochen | 2,9 N | 2,7 N | 1,4 N | 1,2 N |
| 4 Wochen | 3,0 N | 2,9 N | 1,4 N | 1,2 N |

## Patentansprüche

1. Magnetische Aufzeichnungsträger, bestehend aus einem nichtmagnetischen Trägermaterial und mindestens einer haftfest darauf aufgebrachten Magnetschicht auf der Basis eines in einem mindestens zu 50 Gew.-% aus einem thermoplastischen Polyurethan bestehenden Bindemittel feinverteilten magnetischen Materials, dadurch gekennzeichnet, daß als thermoplastisches Polyurethan ein in Tetrahydrofuran für die Beschichtung ausreichend lösliches, isocyanatgruppenfreies, verzweigtes Polyurethan mit OH-gruppenhaltigen Harnstoffgruppen an den Kettenenden und einem Molekulargewicht (Gewichtsmittel) zwischen

50 000 und 150 000 eingesetzt wird, welches aus

A. 1 Mol eines Polydiols mit einem Molekulargewicht zwischen 400 und 4 000,

B. 0,3 bis 10 Mol eines geradkettigen aliphatischen Diols mit 2 bis 10 Kohlenstoffatomen,

C. 0,05 bis 0,5 Mol eines Tri- oder Polyols mit 3 bis 10 Kohlenstoffatomen,

D. 1,3 bis 13 Mol eines Diisocyanats mit 6 bis 30 Kohlenstoffatomen und

E. 0,09 bis 2 Mol eines Aminoalkohols mit 2 bis 16 Kohlenstoffatomen

hergestellt wird, mit der Maßgabe, daß sich das Verhältnis der OH-Gruppen der Komponenten A bis C zu den NCO-Gruppen der Komponente D zu den Amingruppen der Komponente E wie 1 zu 1,03 bis 1,3 zu 0,03 bis 0,3 verhält.

**2.** Magnetischer Aufzeichnungsträger gemäß Anspruch 1 oder 2, dadurch gekennzeichnet, daß er das genannte Polyurethan als alleiniges Bindemittel enthält.

## Claims

**1.** A magnetic recording medium, consisting of a nonmagnetic substrate and at least one magnetic layer firmly applied thereon and based on a magnetic material finely distributed in a binder comprising at least 50% by weight of a thermoplastic polyurethane, wherein the thermoplastic polyurethane used is an isocyanate-free, branched polyurethane which is sufficiently soluble in tetrahydrofuran for coating and has OH-containing urea groups at the chain ends and a weight average molecular weight of from 50,000 to 150,000 and which is prepared from

A. 1 mol of a polyidol having a molecular weight of from 400 to 4,000,

B. from 0.3 to 10 mol of a straight-chain aliphatic diol of 2 to 10 carbon atoms,

C. from 0.05 to 0.5 mol of a tri- or polyol of 3 to 10 carbon atoms,

D. from 1.3 to 13 mol of a diisocyanate of 6 to 30 carbon atoms and

E. from 0.09 to 2 mol of an aminoalcohol of 2 to 16 carbon atoms,

with the proviso that the ratio of the OH groups of components A to C to the NCO groups of component D to the amine groups of component E is 1 : 1.03-1.3 : 0.03-0.3.

**2.** A magnetic recording medium as claimed in claim 1 or 2, which contains the stated polyurethane as the sole binder.

## Revendications

**1.** Supports magnétiques d'enregistrement constitués d'un substrat non magnétique et d'au moins une couche magnétique, appliquée sur celui-ci et y adhérant, à base d'un matériau magnétique finement réparti dans un liant constitué à au moins 50% en masse d'un polyuréthanne thermoplastique, caractérisés par le fait que comme polyuréthanne thermoplastique est utilisé un polyuréthanne ramifié, sans groupes isocyanates,suffisamment soluble dans le tétrahydrofuranne pour l'application et ayant en bout de chaîne des groupes urée contenant des groupes OH et une masse moléculaire (moyenne) comprise entre 50 000 et 150 000, qui est élaboré avec

A. 1 mol d'un polydiol ayant une masse moléculaire comprise entre 400 et 4000,

B. 0,3 à 10 mol d'un diol aliphatique linéaire à 2 à 10 atomes de carbone,

C. 0,05 à 0,5 mol d'un triol ou d'un polyol à 3 à 10 atomes de carbone,

D. 1,3 à 13 mol d'un diisocyanate à 6 à 30 atomes de carbone et

E. 0,09 à 2 mol d'un aminoalcool à 2 à 16 atomes de carbone,

les groupes OH des constituants A à C, les groupes NCO du constituant D et les groupes amines du constituant E étant dans les proportions de 1/1,03 à 1,3/0,03 à 0,3.

**2.** Support magnétique d'enregistrement selon la revendication 1, caractérisé par le fait qu'il contient le polyuréthanne cité comme liant unique.